(19) Europäisches Patentamt
European Patent Office
Office européen des brevets

(11) **EP 2 379 216 B1**

(12) **EUROPÄISCHE PATENTSCHRIFT**

(45) Veröffentlichungstag und Bekanntmachung des Hinweises auf die Patenterteilung:
**25.10.2017  Patentblatt 2017/43**

(21) Anmeldenummer: **09768402.1**

(22) Anmeldetag: **16.12.2009**

(51) Int Cl.:
**B01J 8/06** *(2006.01)*

(86) Internationale Anmeldenummer:
**PCT/EP2009/067238**

(87) Internationale Veröffentlichungsnummer:
**WO 2010/076208 (08.07.2010 Gazette 2010/27)**

(54) **REAKTOR UND VERFAHREN ZUR HERSTELLUNG VON PHOSGEN**

REACTOR AND PROCESS FOR THE PRODUCTION OF PHOSGENE

RÉACTEUR ET PROCÉDÉ DE PRÖPARATION DU PHOSGÈNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.12.2008  EP 08171730**

(43) Veröffentlichungstag der Anmeldung:
**26.10.2011  Patentblatt 2011/43**

(73) Patentinhaber: **BASF SE**
**67056 Ludwigshafen am Rhein (DE)**

(72) Erfinder:
• **OLBERT, Gerhard**
**69221 Dossenheim (DE)**
• **GERLINGER, Wolfgang**
**67117 Limburgerhof (DE)**
• **KIM, Byoung Yeon**
**JunJam (KR)**

(56) Entgegenhaltungen:
**EP-A1- 1 080 780      EP-A1- 1 813 346**
**WO-A1-03/072237      DE-A1-102004 041 777**

**Beschreibung**

Die Erfindung betrifft einen Reaktor und ein Verfahren zur Herstellung von Phosgen durch Gasphasenreaktion von Kohlenmonoxid und Chlor in Gegenwart eines Feststoffkatalysators.

Phosgen wird großtechnisch in einer katalytischen Gasphasenreaktion von Kohlenmonoxid und Chlor in Gegenwart eines Feststoffkatalysators, bevorzugt Aktivkohle, hergestellt. Die Reaktion ist stark exotherm, die Bildungsenthalpie beträgt -107,6 kJ/mol. Die Reaktion wird in der Regel in einem Rohrbündelreaktor nach dem in Ullmanns Enzyklopädie der technischen Chemie, Vol. A 19, Seite 413 bis 414 beschriebenen Verfahren, hergestellt. Danach wird der körnige Katalysator, mit einer Korngröße im Bereich von 3 bis 5 mm, in Rohren mit einem Innendurchmesser zwischen 50 und 70 mm eingesetzt. Bei 40 bis 50°C springt die Reaktion an, die Temperatur steigt in den Rohren bis auf etwa 580°C und fällt dann wieder ab. Kohlenmonoxid wird in geringem Überschuss eingesetzt, um zu gewährleisten, dass das gesamte Chlor umgesetzt wird und um chlorfreies Phosgen zu erhalten. Die Reaktion kann drucklos oder unter Druck durchgeführt werden, häufig bei 2 bis 5 bar, um das Phosgen bereits mit Kühlwasser kondensieren zu können.

Phosgen ist ein wichtiger Hilfsstoff bei der Herstellung von Zwischen- und Endprodukten in nahezu allen Zweigen der Chemie. Das mengenmäßig größte Verwendungsgebiet ist die Herstellung von Diisocyanaten für die Polyurethanchemie, insbesondere von Toluylendiisocyanat und von 4,4-Diisocyanat-diphenylmethan.

Zur besseren Abführung der Reaktionswärme über den zwischen den Kontaktrohren zirkulierende Wärmeträger werden Umlenkbleche zwischen den Kontaktrohren eingebaut, die eine Queranströmung der Kontaktrohre durch den Wärmeträger bewirken.

Bekannte Rohrbündelreaktoren für die Herstellung von Phosgen sind zwecks maximaler Raumausnutzung im Reaktorinnenraum vollständig berohrt. Sie weisen Umlenkbleche zwischen den Kontaktrohren auf, die relativ kurz gehalten sind, d.h. sie reichen im Umlenkbereich nicht bis zur Reaktorinnenwand, sondern lassen jeweils einen Anteil von etwa 25 bis 30 % des gesamten Reaktorquerschnitts frei, um den Druckabfall des Wärmeträgers und somit die Betriebskosten für die Umwälzpumpe des Wärmeträgers zu begrenzen. Im Umlenkbereich ändert sich das Strömungsprofil des Wärmeträgers um die Kontaktrohre von Queranströmung auf Längsanströmung. Die Kontaktrohre werden schlechter gekühlt, und in der Folge treten an den Kontaktrohren im Umlenkbereich Korrosionsprobleme auf.

Die WO 03/072237 beschreibt einen verbesserten Reaktor zur Herstellung von Phosgen, der eine erhöhte spezifische Querschnittsbelastung und somit eine höhere Kapazität ermöglicht, indem die Korrosionsprobleme an den Kontaktrohren im Umlenkbereich vermieden werden. Hierzu schlägt die WO 03/072237 einen Reaktor mit einem Bündel von parallel zueinander, in Reaktorlängsrichtung angeordneten Kontaktrohren vor, die an ihren Enden in Rohrböden befestigt sind, mit je einer Haube an beiden Enden des Reaktors, sowie mit senkrecht zur Reaktorlängsrichtung im Zwischenraum zwischen den Kontaktrohren angeordneten Umlenkblechen, die alternierend einander gegenüberliegende Durchtrittsöffnungen an der Reaktorinnenwand freilassen, wobei die Kontaktrohre mit dem Feststoffkatalysator befüllt sind, das gasförmige Reaktionsgemisch von einem Reaktorende über eine Haube durch die Kontaktrohre geleitet und vom entgegengesetzten Reaktorende über die zweite Haube abgezogen und durch den Zwischenraum um die Kontaktrohre ein flüssiger Wärmeträger geleitet wird und wobei der Reaktor im Bereich der Durchtrittsöffnungen unberohrt ist.

Es hat sich jedoch gezeigt, dass bei Reaktoren mit größerem Durchmesser, insbesondere ab Reaktordurchmessern von etwa 3,50 m, mit Zunahme des Reaktordurchmessers der Druckverlust des im Mantelraum strömenden Wärmeträgers über den Reaktorquerschnitt, von der einen bis zur gegenüberliegenden Durchtrittsöffnung an der Reaktorinnenwand zu groß wird. Darüber hinaus werden auch die Verluste an Wärmeträger und somit der Druckverlust über die Spalte zwischen der Außenwand der Kontaktrohre und den Umlenkblechen, die aus fertigungstechnischen Gründen vorhanden sind, zu groß. Entsprechend wird der Pumpaufwand für den Wärmeträger zu groß.

Darüber hinaus führt der große Druckverlust über den Reaktorquerschnitt zwischen den beiden einander gegenüberliegenden Durchtrittsöffnungen an der Reaktorinnenwand zu größeren Unterschieden der Wärmeübergangskoeffizienten an der Grenzschicht zwischen den Kontaktrohren und dem Wärmeträger, wobei durchaus Faktoren von 1 : 2 zwischen Bereichen mit gutem Wärmeübergang und Bereichen mit schlechtem Wärmeübergang innerhalb eines Reaktorquerschnittes auftreten können. Entsprechend werden die Kontaktrohre in den Bereichen mit schlechtem Wärmeübergang schlechter gekühlt. Da die Kontaktrohre jedoch, abhängig vom eingesetzten Werkstoff, insbesondere Duplexstahl, eine maximale Temperaturbelastung aufweisen, häufig im Bereich von etwa 160 bis 200°C, insbesondere von etwa 170 bis 180°C, die nicht überschritten werden darf, weil ansonsten die Korrosion des Werkstoffs stark ansteigt, limitieren die Bereiche mit schlechtem Wärmeübergang den Durchsatz und damit die Kapazität des Reaktors.

Bei Phosgenreaktoren mit sehr großen Durchmessern, ab 2,5 m, bis zu Durchmessern von 6 m, wird der Verlust an Wärmeträger und der Druckverlust durch die Bypassströmungen durch die Spalte zwischen den Umlenkblechen und den Kontaktrohren häufig so groß, dass die inneren Rohre, im zentralen Bereich des Reaktors, nicht mehr ausreichend umströmt und so nicht mehr ausreichend gekühlt werden und daher korrosionsgefährdet sind.

Es war daher Aufgabe der Erfindung, ein Verfahren zur Herstellung von Phosgen in großtechnischem Maßstab und einen Reaktor zur Verfügung zu stellen, der mit einer hohen Phosgenlast betrieben werden kann, und dennoch eine ausreichende Kühlung, auch der Kontaktrohre im zentralen Bereich des Reaktors, sicherzustellen.

Die Aufgabe wird gelöst durch einen Reaktor entsprechend der Definition in Anspruch 1.

In einer bevorzugten Ausführungsform sind die zwei untereinander gleichen Bündel von Kontaktrohren jeweils in zwei weitere, untereinander gleiche Bündel von Kontaktrohren aufgetrennt, so dass insgesamt vier Bündel von Kontaktrohren vorliegen, die durch zwei kontaktrohrfreie Bereiche, die sich zu beiden Seiten von jeweils senkrecht zueinander stehenden Durchmessern des Reaktors erstrecken, voneinander getrennt sind. Hierbei sind die Umlenkbleche in ihrer Geometrie, bevorzugt der Geometrie des Rohrspiegels, das heißt der Anordnung der Kontaktrohre über den Reaktorquerschnitt anzupassen. Der Mantelraum um jedes der vier Bündel von Kontaktrohren ist bevorzugt mit jeweils einer eigenen Zu- und Abführung für den Wärmeträger zu versehen.

In einer weiteren bevorzugten Ausführungsform werden die Strömungswege des Wärmeträgers in jedem Reaktorquerschnitt, jeweils gemessen vom ersten bis zum letzten Kontaktrohr in Strömungsrichtung des Wärmeträgers, durch den Einbau von Dummy-Rohren einander weiter angeglichen.

Es wurde gefunden, dass es möglich ist, durch die Segmentierung des Bündels von Kontaktrohren in zwei oder vier jeweils untereinander gleiche Bereiche, die durch Bereiche getrennt sind, die von Umlenkblechen frei sind, und durch die somit der Wärmeträger weitgehend ungehindert zirkulieren kann, eine weitere Verbesserung der Anströmung der Kontaktrohre durch den Wärmeträger und somit eine weitere Vergleichmäßigung der Wärmeübergangskoeffizienten $\alpha$ über jeden Reaktorquerschnitt zu erreichen. Dadurch können Phosgenreaktoren mit noch größeren Durchmessern und mit noch höherer Phosgenlast problemlos betrieben werden, ohne dass die Kontaktrohre korrodieren.

Für die Strömung des Wärmeträgers im Mantelraum des Reaktors zwischen zwei Umlenkblechen, innerhalb eines Reaktorquerschnitts, von einem rohrfreien Bereich (Durchtrittsöffnung) zum gegenüberliegenden rohrfreien Bereich, jeweils an der Reaktorinnenwand, ist der Druckverlust derselbe für alle Strömungswege des Wärmeträgers.

Der Druckverlust $\Delta p$ kann durch die nachfolgende Gleichung beschrieben werden:

$$\Delta p = l/d_R \left( \zeta_1 \cdot \eta \cdot v + \zeta_2 \cdot \rho/2 \; v^2 \right),$$

wobei $\Delta p$ den Druckverlust in Pascal, $\zeta_1$ und $\zeta_2$ die dimensionslosen Druckverlustkoeffizienten (Druckverlustbeiwerte), l die Länge des Strömungsweges in m, $d_R$ den Durchmesser eines Kontaktrohres (charakteristische Größe) in m, $\rho$ die Dichte in $kg/m^3$, v die Geschwindigkeit in m/s und $\eta$ die Viskosität in Pa·s, bezeichnet.

In der obigen Formel entspricht der erste Term einem laminar geprägten Teil des Druckverlustes, der proportional zur Geschwindigkeit ist und der zweite Term einem turbulent geprägten Teil, der proportional zum Quadrat der Geschwindigkeit ist.

Da der Druckverlust für jeden Strömungsweg derselbe ist, ist, bei ansonsten unveränderten Bedingungen, insbesondere bei gleicher Rohrteilung, für kürzere Strömungswegen, wie sie in der Mitte des Rohrspiegels eines Reaktors nach dem Stand der Technik, mit einander gegenüberliegenden Begrenzungen des Bündels von Kontaktrohren in Form von Kreissehnen, gegenüber Strömungswegen an der Reaktorinnenwand, die Geschwindigkeit des Wärmeträgers nach der obigen Formel für den Druckverlust entsprechend größer. Da der Wärmeübergangskoeffizient $\alpha$ näherungsweise direkt proportional zur Geschwindigkeit hoch 0,8 ist, ergeben sich für die längeren Strömungswege, am Reaktorinnenmantel, niedrigere Strömungsgeschwindigkeiten des Wärmeträgers und entsprechend niedrigere Wärmeübergangskoeffizienten, das heißt ein schlechterer Wärmeübergang, gegenüber den kürzeren Strömungswegen, in der Reaktormitte.

Der erfindungsgemäße Reaktor ist zylinderförmig ausgebildet, mit einem Innendurchmesser von bevorzugt 0,5 bis 8 m, weiter bevorzugt von 2,5 bis 6 m, insbesondere von 3,5 bis 6 m.

Im Reaktor ist ein Bündel, das heißt eine Vielzahl von Kontaktrohren, parallel zueinander in Reaktorlängsrichtung angeordnet.

Die Anzahl der Kontaktrohre liegt bevorzugt im Bereich von 100 bis 10000, insbesondere von 2000 bis 6000.

Die Kontaktrohre sind aus einem korrosionsfesten Material, beispielsweise Edelstahl, bevorzugt Duplexstahl 1.4462, Edelstahl 1.4571 oder Edelstahl 1.4541 oder auch aus Nickel-Basislegierungen oder aus Nickel gebildet. Bevorzugt sind auch die Rohrböden oder auch der gesamte Reaktor aus den vorerwähnten Werkstoffen, insbesondere aus Duplex- oder Edelstahl gebildet.

Jedes Kontaktrohr weist bevorzugt eine Wandstärke im Bereich von 2,0 bis 4,0 mm, insbesondere von 2,5 bis 3,0 mm, und einen Rohrinnendurchmesser im Bereich von 20 bis 90 mm, bevorzugt im Bereich von 30 bis 50 mm auf.

Die Kontaktrohre weisen bevorzugt eine Länge im Bereich von 1,5 bis 6,0 m, insbesondere im Bereich von 2,5 bis 4,5 m, auf.

Die Kontaktrohre sind bevorzugt derart im Reaktorinnenraum angeordnet, dass das Verhältnis zwischen dem Abstand der Mittelpunkte unmittelbar benachbarter Kontaktrohre und dem Außendurchmesser der Kontaktrohre im Bereich von 1,15 bis 1,4, bevorzugt im Bereich von 1,2 bis 1,3 liegt und dass die Kontaktrohre in Dreiecksteilung im Reaktor angeordnet sind.

Die Kontaktrohre sind an beiden Enden in Rohrböden flüssigkeitsdicht befestigt, bevorzugt verschweißt. Die Rohrböden bestehen ebenfalls aus einem korrosionsfesten Material, bevorzugt Edelstahl, insbesondere Duplexstahl, besonders bevorzugt aus demselben Material wie die Kontaktrohre.

Beide Reaktorenden sind nach außen durch Hauben begrenzt. Durch eine Haube erfolgt die Zuführung des Reaktionsgemisches zu den Kontaktrohren, durch die Haube am anderen Ende des Reaktors wird der Produktstrom abgezogen.

In den Hauben sind bevorzugt Gasverteiler zur Vergleichmäßigung des Gasstromes angeordnet, beispielsweise in Form einer Platte, insbesondere einer perforierten Platte.

Im Zwischenraum zwischen den Kontaktrohren sind senkrecht zur Reaktorlängsrichtung Umlenkbleche angeordnet.

Die Umlenkbleche sind dergestalt ausgebildet, dass jeweils ein Umlenkblech zwei einander gegenüberliegende kreissegmentförmige Aussparungen aufweist, und das jeweils unmittelbar darauf folgende Umlenkblech eine Durchtrittsöffnung in einem zentralen Bereich des Reaktors aufweist, der von zwei zueinander und zu einem Reaktordurchmesser parallelen und zum Reaktordurchmesser äquidistanten Geraden begrenzt ist.

In einer bevorzugten Ausführungsform weisen die Umlenkbleche zwei zentrale Durchtrittsöffnungen auf.

Die Umlenkbleche bewirken eine Umlenkung des im Reaktorinnenraum, im Zwischenraum zwischen den Kontaktrohren zirkulierenden Wärmeträgers, dergestalt, dass die Kontaktrohre vom Wärmeträger quer angeströmt werden, wodurch die Wärmeabführung verbessert wird.

Die Anzahl der Umlenkbleche beträgt bevorzugt etwa 6 bis 21.

Vorzugsweise sind die Umlenkbleche äquidistant zu einander angeordnet, besonders bevorzugt ist jedoch das unterste und das oberste Umlenkblech jeweils vom Rohrboden weiter entfernt als der Abstand zweier aufeinander folgender Umlenkbleche zueinander, bevorzugt um etwa das 1,5-fache.

Im Bereich der Durchtrittsöffnungen ist der Reaktor unberohrt, das heißt er frei von Kontaktrohren.

Bevorzugt lassen alle Umlenkbleche jeweils gleiche Durchtrittsöffnungen frei.

Die Fläche jeder Durchtrittsöffnung beträgt bevorzugt 5 bis 20 %, insbesondere 8 bis 14 % des Reaktorquerschnitts.

Die Gesamtfläche des zentralen rohrfreien Bereiches bzw. die Summe der Flächen der beiden in einem Reaktorquerschnitt senkrecht zueinander angeordneten zentralen rohrfreien Bereiche ist vorzugsweise so auszulegen, dass die axiale Strömungsgeschwindigkeit des Wärmeträgers durch den einen oder durch die beiden zentralen rohrfreien Bereiche etwa 0,25 bis 2,0 m/s, bevorzugt etwa 0,5 bis 1,5 m/s, beträgt.

Bevorzugt sind die Umlenkbleche nicht dichtend um die Kontaktrohre angeordnet, und lassen eine Leckageströmung von bis zu 40 Vol.-% des Gesamtstroms des Wärmeträgers zu. Hierzu sind zwischen den Kontaktrohren und Umlenkblechen Spalte im Bereich von 0,1 bis 0,6 mm, bevorzugt von 0,2 bis 0,4 mm vorgesehen.

Es ist vorteilhaft, die Umlenkbleche mit Ausnahme der Bereiche der Durchtrittsöffnungen zur Reaktorinnenwand hin flüssigkeitsdicht zu gestalten, so dass dort kein zusätzlicher Leckagestrom auftritt.

Die Umlenkbleche werden bevorzugt aus einem korrosionsfesten Material, bevorzugt Edelstahl, insbesondere Duplexstahl, bevorzugt in einer Dicke von 8 bis 30 mm, bevorzugt von 10 bis 20 mm, gebildet. Der Werkstoff der Umlenkbleche soll elektrochemisch mit dem Werkstoff der Kontaktrohre verträglich sein.

Die Kontaktrohre sind mit einem Feststoffkatalysator, bevorzugt Aktivkohle, gefüllt. Die Katalysatorschüttung in den Kontaktrohren weist bevorzugt ein Lückenvolumen von 0,33 bis 0,5, insbesondere von 0,33 bis 0,40, auf.

Erfindungsgemäß wird, ausgehend von der oben beschriebenen Anordnung der Kontaktrohre entsprechend der Druckschrift WO 03/072237, die Anordnung der Kontaktrohre modifiziert, indem die seitlichen Begrenzungen des Bündels von Kontaktrohren im Rohrspiegel von Kreissehnen zu Kreisbögen hin geändert werden. Es wird somit gegenüber einem Reaktor nach dem Stand der Technik die Anzahl der Kontaktrohre auf dem längsten Strömungsweg des Wärmeträgers an der Reaktorinnenwand am stärksten reduziert, und in der Reaktormitte, entsprechend erhöht. Dabei ist es nicht erforderlich, dass die seitlichen Begrenzungen des Bündels von Kontaktrohren bei der erfindungsgemäßen Anordnung der Kontaktrohre genau einer Kreisbogenform entsprechen, es ist lediglich bevorzugt, dass sie sich einer Kreisbogenform annähern.

Insbesondere können die seitlichen Begrenzungen des Bündels von Kontaktrohren hin zu jeweils einer polygonalen Linie geändert werden, die jeweils in einen Kreisbogen einbeschrieben ist.

In einer weiteren Ausführungsform können die Wärmeübergangskoeffizienten an der Grenzschicht zwischen den Kontaktrohren und dem Wärmeträger in der Weise einander angeglichen werden, indem in den Bereichen mit dem schlechtesten Wärmeübergang, das heißt in den reaktorinnenwandnahen Bereichen mit den längsten Strömungswegen des Wärmeträgers, Dummy-Rohre eingebaut werden, oder indem aus diesem Bereich Kontaktrohre herausgenommen werden. Darüber hinaus ist es auch möglich, in den korrosionsgefährdeten Bereichen, mit schlechteren Wärmeübergangskoeffizienten, Kontaktrohre zu verschließen.

In einer weiteren Ausführungsform ist es möglich, im inneren Bereich des Reaktors, wo die Strömungswege des Wärmeträgers am kürzesten und somit die Wärmeübergangskoeffizienten am größten sind, strömungsstörende Einbauten, beispielsweise Lochbleche, vorzusehen, um die Wärmeübergangskoeffizienten über den gesamten Reaktorquerschnitt einander weiter anzugleichen.

Insbesondere kann die Änderung der Anordnung der Kontaktrohre zwecks Angleichung der Strömungswege des Wärmeträgers in jedem Reaktorquerschnitt nach dem folgenden Algorithmus erfolgen:

- zunächst wird der Rohrspiegel, das heißt die Anordnung der Kontaktrohre in einem Reaktorquerschnitt gezeichnet, wobei die beiden einander gegenüberliegenden seitlichen Begrenzungen des Bündels von Kontaktrohren im Spiegel Kreissehnen sind; und wobei im Rohrspiegel die Hauptströmungsrichtung des Wärmeträgers als y-Koordinate und die Koordinate rechtwinklig hierzu, in der Ebene des Reaktorquerschnitts als x-Koordinate bezeichnet wird;

- der Rohrspiegel wird anschließend in n zu den Kreissehnen parallele und zu einander äquidistante Geraden unterteilt;

- jeder der Geraden n wird in m äquidistante Punkte aufgeteilt, die fortlaufend mit einer natürlichen Zahl i durchnummeriert werden, wobei i = 1 bis m, und wobei die äußersten Punkte, das heißt die Punkte i = 1 und die Punkte i = m jeweils auf dem äußersten Rand des Rohrspiegels, das heißt am Mantel des Reaktors liegen;

- die jeweils i-ten Punkte auf den Geraden werden miteinander verbunden, wobei die Strömungswege erhalten werden, deren Längen durch die nachfolgenden Iterationsschritte angeglichen werden:

(1) ermittle den längsten Strömungsweg $i_{max}$ und kürzesten Strömungsweg $i_{min}$; falls mehr als ein längster bzw. kürzester Strömugnweg existieren, wähle zufällig einen aus,

(2) ermittle die Differenz der Längen der Strömungswege von kürzestem und längstem Strömungsweg, d.h. die Ungleichheit der Strömungsweglängen; ist die Ungleichheit der Strömungsweglängen weniger als 1 % des Mittelwerts der Längen der Strömungswege, gehe zu (8);

(3) verkürze den längsten Strömungsweg $i_{max}$ um 25 % der Ungleichheit; indem die y-Koordinate der beiden äußeren Punkte, d.h. des Punktes auf der 1. und des Punktes auf der n-ten Geraden auf diesem Strömungsweg gleichmäßig verringert und die dazwischen liegenden Punkte anschließend wieder äquidistant verteilt werden;

(4) analog wird der kürzeste Strömungsweg so verlängert, dass die Fläche des Rohrspiegels, d.h. die durch die beiden Kreissehnen und den Reaktormantel begrenzte Fläche sich im Vergleich zur vorigen Iteration nicht verändert;

(5) handelt es sich nicht um die äußeren Strömungswege i = 1 bzw. i = m, werden bei dieser Veränderung der y-Koordinate der Punkte die x-Koordinaten nicht verändert;

(6) handelt es sich um eine der beiden äußeren Kurven, so wird die x-Koordinate derart geändert, dass die Punkte weiterhin auf dem Reaktormantel liegen; ist eine x-Verschiebung eines Punktes notwendig, werden alle Punkte auf der Linie i = n so verschoben, dass sie wieder äquidistant zueinander sind;

(7) gehe zurück zu (1);

(8) Ende der Iteration.

Nach dem obigen Algorithmus wird lediglich die Hauptströmungsrichtung des Wärmeträgers in der Ebene des Reaktorquerschnitts, die vorliegend als y-Koordinate bezeichnet wird, zwischen den einander gegenüberliegenden Durchtrittsöffnungen an der Reaktorinnenwand betrachtet. Diese vereinfachte Betrachtung ist in der Regel bereits ausreichend als Grundlage für die Ermittlung einer geänderten Anordnung der Kontaktrohre.

Bei einer genaueren Betrachtung der Strömungswege des Wärmeträgers ist jedoch die Strömungsrichtung senkrecht zu der obigen Strömungsrichtung in der Ebene des Reaktorquerschnitts zu berücksichtigen und die vorliegend als x-Koordinate bezeichnet wird.

Wird nur die Hauptströmungsrichtung, entlang der y-Koordinate, über den Reaktorquerschnitt berücksichtigt, so ist die Anordnung der Kontaktrohre dergestalt zu ändern, dass die Strömungswege in jedem Reaktorquerschnitt, vom ersten bis zum letzten Kontaktrohr jeweils gleich sind.

Da jedoch vorteilhaft zusätzlich die Strömung des Wärmeträgers entlang der x-Koordinate zu berücksichtigen ist, ist, zwecks Ausgleich der Strömung auch zusätzlich in x-Richtung, die Anordnung der Kontaktrohre dergestalt anzupassen, dass die Strömungswege des Wärmeträgers am Reaktorinnenmantel um bis zu 25 % kürzer sind als entlang der Mittelachse.

Indem durch die erfindungsgemäße Anordnung der Kontaktrohre der Strömungswege insgesamt gegenüber einem Reaktor nach dem Stand der Technik, entsprechend WO 03/072237, verkürzt werden, ist der Druckverlust des Wärmeträgers bei gleicher Geschwindigkeit des Wärmeträgers insgesamt geringer. Entsprechend sind auch die Bypassströmung des Wärmeträgers durch die Spalte zwischen den Umlenkblechen und den Kontaktrohren geringer und die erforderlichen Umwälzmengen an Wärmeträger geringer.

Gegenstand der Erfindung ist auch ein Verfahren zur Herstellung von Phosgen durch Gasphasenreaktion von Kohlenmonoxid und Chlor in Gegenwart eines Feststoffkatalysators in einem Reaktor, der in einer Vielzahl von parallel zueinander in Längsrichtung des Reaktors angeordneten Kontaktrohren den Feststoffkatalysator enthält, die an beiden Enden derselben in jeweils einem Rohrboden eingeschweißt sind, mit Zuführung der Edukte am oberen Ende der Kontaktrohre und Ableitung des gasförmigen Reaktionsgemisches am unteren Ende der Kontaktrohre, jeweils über eine Haube, sowie mit Zu- bzw. Abführeinrichtungen für einen flüssigen Wärmeträger in den Mantelraum zwischen den Kontaktrohren, wobei die Strömung des Wärmeträgers im Mantelraum zwischen den Kontaktrohren mittels Umlenkblechen mäanderförmig geleitet wird, wobei jeweils ein Umlenkblech zwei einander gegenüberliegende kreissegmentförmige Durchtrittsöffnungen an der Reaktorinnenwand freilässt, und das jeweils unmittelbar darauf folgende Umlenkblech eine zentrale Durchtrittsöffnung freilässt, die von zwei zueinander und zu einem Reaktordurchmesser parallelen und äquidistanten Geraden begrenzt ist, und wobei der Reaktor im Bereich der kreissegmentförmigen Durchtrittsöffnungen und der zentralen Durchtrittsöffnung unberohrt ist, dass dadurch gekennzeichnet ist, dass die Vielzahl der parallel zueinander in Längsrichtung des Reaktors ausgerichteten Kontaktrohre in zwei untereinander gleichen Bündeln von Kontaktrohre angeordnet sind, die voneinander durch einen kontaktrohrfreien Bereich getrennt sind, und dass die Wärmeübergangskoeffizienten an der Grenzschicht zwischen den Kontaktrohren und dem Wärmeträger über jeden Reaktorquerschnitt vergleichmäßigt werden, indem die Strömungswege des Wärmeträgers in jedem Reaktorquerschnitt, jeweils gemessen vom ersten bis zum letzten Kontaktrohr in Strömungsrichtung des Wärmeträgers durch eine geänderte Anordnung der Kontaktrohre einander angeglichen werden.

Bevorzugt ist ein Verfahren, wonach die zwei untereinander gleichen Bündel von Kontaktrohren jeweils in zwei weitere, untereinander gleiche Bündel von Kontaktrohren aufgetrennt sind, so dass insgesamt vier Bündel von Kontaktrohren vorliegen, die durch zwei kontaktrohrfreie Bereiche, die sich zu beiden Seiten von jeweils senkrecht zueinander stehenden Durchmessern des Reaktors erstrecken, voneinander getrennt sind.

Bevorzugt können die Strömungswege des Wärmeträgers in jedem Reaktorquerschnitt, jeweils gemessen vom ersten bis zum letzten Kontaktrohr in Strömungsrichtung des Wärmeträgers zusätzlich durch den Einbau von Dummy-Rohren einander angeglichen werden.

Durch die erfindungsgemäße Ausgestaltung des Reaktors, mit Auftrennung der Kontaktrohre in zwei oder vier Bündel, werden die Strömungswege durch eine geänderte Anordnung der Kontaktrohre, wobei um Rohrspiegel die Kreissehnen zu Kreisbögen hin geändert werden, die Strömungswege der Reaktorinnenwand gleich oder um bis zu 15 % kleiner als entlang der Mittelachse des Reaktors ausgelegt werden.

Durch die erfindungsgemäße Anordnung der Kontaktrohre können die Abweichungen zwischen den Wärmeübergangskoeffizienten $\alpha$ innerhalb jedes Reaktorquerschnitts, von ursprünglich etwa 13 bis 20 % bei einem Reaktor nach dem Stand der Technik, entsprechend der Druckschrift WO 03/072237 bis auf Unterschiede von lediglich 8 bis 10 % reduziert werden.

Die Erfindung wird im Folgenden anhand von Ausführungsbeispielen sowie einer Zeichnung näher erläutert.

Ausführungsbeispiele

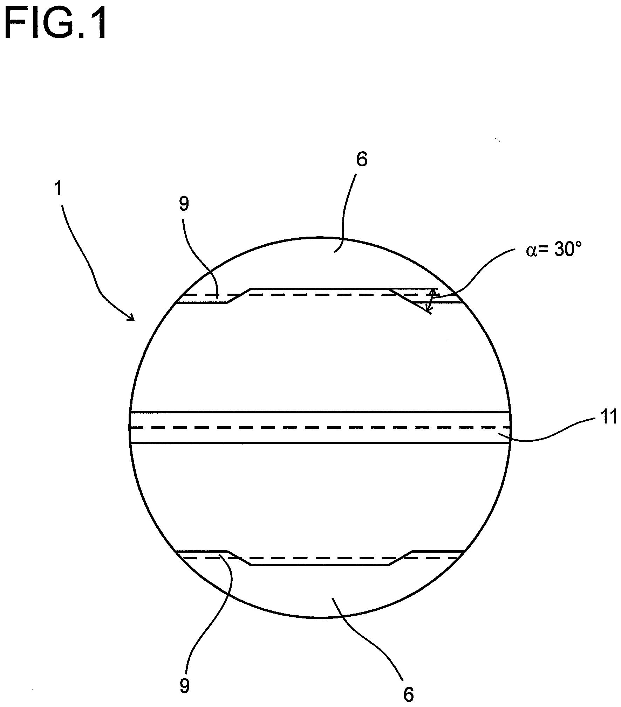

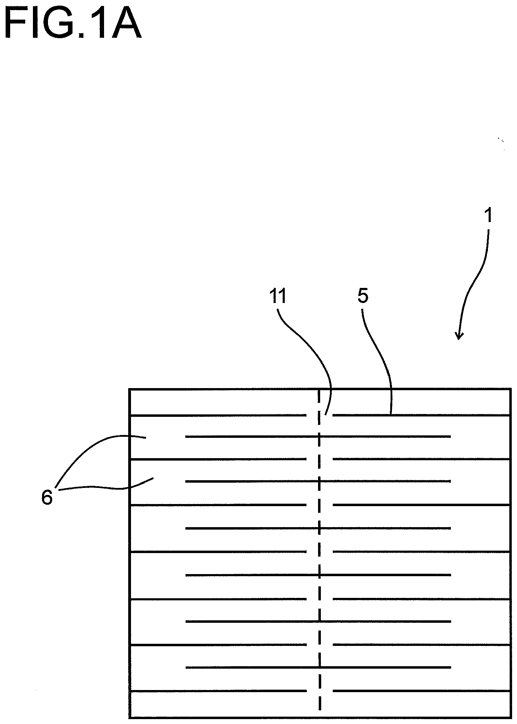

In einem großtechnischen Reaktor, wie schematisch in Figuren 1 und 1A dargestellt, wurde Phosgen hergestellt, wobei in einem Ausführungsbeispiel nach dem Stand der Technik die Kontaktrohre dergestalt angeordnet waren, dass der Rohrspiegel zwei einander gegenüberliegende Begrenzungen in Form von Kreissehnen aufwies, bzw. erfindungsgemäß, indem die Anordnung der Kontaktrohre im Rohrspiegel dergestalt geändert wurde, dass die einander gegenüberliegenden seitlichen Begrenzungen von Kreissehnen in polygonalen Linien geändert wurden, und wobei darüber hinaus ein zentraler Bereich des Reaktors frei von Kontaktrohren und Umlenkblechen belassen wurde.

Für den erfindungsgemäßen Reaktor mit zwei Bündeln von Kontaktrohren sind jeweils zwei Zu- und zwei Abläufe für den Wärmeträger Monochlorbenzol erforderlich. Das Reaktionsgemisch wird von oben nach unten durch die vertikal angeordneten Kontaktrohre geleitet, und der Wärmeträger Monochlorbenzol kann im Gleichstrom hierzu, das heißt mit Zuführung im oberen Bereich des Reaktors und Ableitung im unteren Bereich des Reaktors und mäanderförmiger Durchströmung des Mantelraums um die Kontaktrohre oder im Gegenstrom zum Reaktionsgemisch, mit Zuleitung im unteren Bereich des Reaktors, mäanderförmiger Durchströmung des Mantelraumes um die Kontaktrohre und Ableitung im oberen Bereich des Reaktors, geleitet werden.

Im Reaktor waren jeweils 5210 Kontaktrohre, mit einem Rohraußendurchmesser von 44,5 mm, einer Wandstärke von 2,6 mm, einer Rohrlänge von 3800 mm, mit einer Teilung von 55 mm, angeordnet, und wobei die Kontaktrohre jeweils den Ecken gleichseitiger Dreiecke angeordnet waren.

Im Reaktor waren 14 Umlenkbleche angeordnet.

Durch die Rohre wurde das Reaktionsgemisch, Kohlenmonoxid und Chlor, über einen Aktivkohle-Katalysator geleitet. Durch den Mantelraum zwischen den Kontaktrohren wurde als Wärmeträger Monochlorbenzol geleitet, wobei die Kühlmittelmenge 3500 t/h betrug, bei einer Eintrittstemperatur des Monochlorbenzols von 67°C, und einer Austrittstemperatur des Monochlorbenzols von 78°C für das Ausführungsbeispiel nach dem Stand der Technik und für das erste erfindungsgemäße Beispiel, mit gleicher Phosgenlast wie nach dem Stand der Technik, bzw. 81 °C für das zweite Ausführungsbeispiel, mit erhöhter Phosgenlast.

Kohlenmonoxid wurde in einem Überschuss von 3,5 Gew.-%, bezogen auf das Gesamtgewicht des Reaktionsgemisches eingesetzt. Die Eintrittstemperatur des Reaktionsgemisches betrug 40°C, der Eintrittsdruck 4,8 bar absolut und die Phosgenmenge 48 t/h für das Ausführungsbeispiel nach dem Stand der Technik und für das erste Ausführungsbeispiel nach der Erfindung bzw. 62,4 t/h für das zweite Ausführungsbeispiel nach der Erfindung.

Für das Ausführungsbeispiel zum Vergleich wurde ein schlechtester Wärmeübergangskoeffizient $\alpha$ von 1290 W/m$^2$/K bei nicht angepasster Anordnung der Kontaktrohre, das heißt bei einem Rohrspiegel mit zwei einander gegenüberliegenden Begrenzungen in Form von Kreissehnen erreicht. Dies führte bei einer Phosgenlast von 2,11 kg Phosgen/m$^2$/s zu einer maximalen Innenwandtemperatur der Kontaktrohre von 154°C.

Durch eine angepasste Anordnung der Kontaktrohre entsprechend der Erfindung, das heißt mit Änderung des Rohrspiegels von zwei einander gegenüberliegenden seitlichen Begrenzungen in Form von Kreissehnen hin zu jeweils einer polygonalen Linie und zusätzlich Freilassung eines zentralen rohrfreien Innenbereichs, jeweils mit den Abmessungen entsprechend den Angaben in der Querschnittsdarstellung in Figur 1, konnte bei ansonsten unveränderten Bedingungen der schlechteste Wärmeübergangskoeffizient $\alpha$ auf 1537 W/m$^2$/K erhöht werden. Dadurch betrug die maximale Innenwandtemperatur der Kontaktrohre lediglich 147°C.

Es wurde daher in einem zweiten Ausführungsbeispiel nach der Erfindung die Phosgenlast erhöht, bis eine maximale Innenwandtemperatur der Kontaktrohre von 154°C, wie beim Reaktor nach dem Stand der Technik, erreicht wurde. Diese maximale Innenwandtemperatur der Kontaktrohre von 154°C wurde bei einem erfindungsgemäßen Phosgenreaktor bei einer Phosgenlast von 2,74 kg Phosgen/m$^2$/s erreicht, entsprechend einer Kapazitätssteigerung um 30 % gegenüber einem Reaktor nach dem Stand der Technik.

In der Zeichnung zeigen im Einzelnen:

Figur 1    einen Querschnitt durch eine Ausführungsform eines erfindungsgemäßen Reaktors mit angepasster Anordnung der Kontaktrohre, mit Längsschnittdarstellung durch den Reaktor in Figur 1A, und

Figur 2    einen Schnitt durch eine Ausführungsform eines erfindungsgemäßen Reaktors mit Querschnitt in der Ebene B-B in Figur 2A.

Der Querschnitt in Figur 1 durch einen Reaktor 1 zeigt einen Rohrspiegel für eine Ausführungsform eines erfindungsgemäßen Reaktors, wobei die seitlichen Begrenzungen des Rohrspiegels an den einander gegenüberliegenden Durchtrittsöffnungen 6 an der Reaktorinnenwand von Kreissehnen hin zu polygonalen Linien geändert sind. Darüber hinaus ist im zentralen Bereich des Reaktors eine zentrale Durchtrittsöffnung 11 vorgesehen, die durch zwei Geraden begrenzt ist, die parallel und äquidistant zu beiden Seiten eines Reaktordurchmessers angeordnet sind, der parallel zu den Kreissehnen 9 angeordnet ist, die den Rohrspiegel nach dem Stand der Technik begrenzen und die ebenfalls rohrfrei ist.

Die Längsschnittdarstellung in Figur 1A durch einen Reaktor 1 zeigt die Anordnung der Umlenkbleche 5, mit Durchtrittsöffnungen 6 am Reaktorinnenmantel und zentraler Durchtrittsöffnung 11.

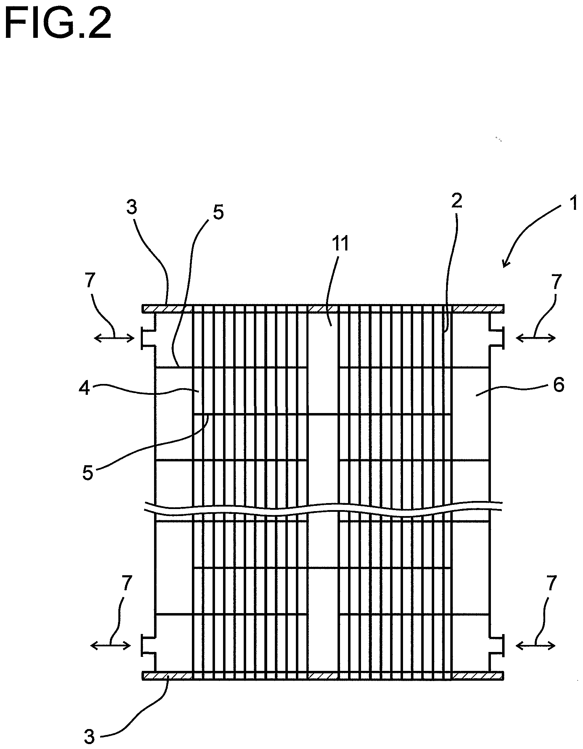

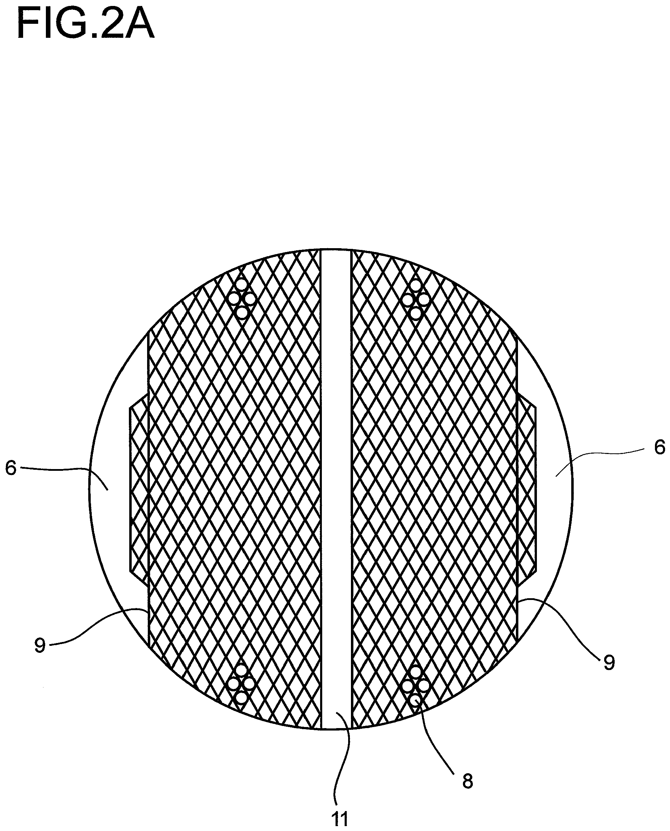

Figur 2 zeigt einen Längsschnitt durch eine Ausführungsform eines erfindungsgemäßen Reaktors 1, mit zwei Bündeln von parallel zueinander angeordneten Kontaktrohren 2, die an ihren beiden Enden in jeweils einem Rohrboden 3 eingeschweißt sind. Durch den Mantelraum um die Kontaktrohre 2 strömt ein Wärmeträger 7, wofür jeweils zwei Zu- und zwei Abläufe vorgesehen sind. Dabei kann der Wärmeträger 7 sowohl im Gleichstrom zu dem von oben nach unten durch die Kontaktrohre geleiteten Reaktionsgemisch, das heißt mit Zuführung im oberen Bereich und Abführung im unteren Bereich des Reaktors, oder umgekehrt, im Gegenstrom zum Reaktionsgemisch, mit Zuführung im unteren Bereich des Reaktors und Ableitung im oberen Bereich des Reaktors geführt wurden.

Die Strömung des Wärmeträgers durch den Mantelraum wird durch Umlenkbleche 5 geleitet, die kreissegmentförmigen Durchtrittsöffnungen 6 am Reaktorinnenmantel und eine zentrale Durchtrittsöffnung 11 freilassen.

In der Querschnittsdarstellung in Figur 2A Ebene B-B ist die geänderte Anordnung der Kontaktrohre im Bereich der kreissegmentförmigen Durchtrittsöffnung 6 sowie die Freilassung der zentralen Durchtrittsöffnung 11 von Kontaktrohren zu erkennen. Darüber hinaus sind in den am stärksten korrosionsgefährdeten Bereichen Dummy-Rohre 8 vorgesehen.

**Patentansprüche**

1.  Zylindrischer Reaktor (1) zur Herstellung von Phosgen durch Gasphasenreaktion von Kohlenmonoxid und Chlor in Gegenwart eines Feststoffkatalysators, der in einer Vielzahl von parallel zueinander in Längsrichtung des Reaktors (1) angeordneten Kontaktrohren (2) vorgesehen ist, die an beiden Enden derselben in jeweils einem Rohrboden (3) eingeschweißt sind, mit Zuführung der Edukte am oberen Ende der Kontaktrohre (2) und Ableitung des gasförmigen Reaktionsgemisches am unteren Ende der Kontaktrohre (2), jeweils über eine Haube, sowie mit Zu- bzw. Abführeinrichtungen für einen flüssigen Wärmeträger (7) in den Mantelraum (4) zwischen den Kontaktrohren (2), wobei die Strömung des Wärmeträgers (7) im Mantelraum (4) zwischen den Kontaktrohren (2) mittels Umlenkblechen (5) mäanderförmig geleitet wird, wobei jeweils ein Umlenkblech (5) zwei einander gegenüberliegende kreissegmentförmige Durchtrittsöffnungen (6) an der Reaktorinnenwand freilässt, und das jeweils unmittelbar darauf folgende Umlenkblech eine zentrale Durchtrittsöffnung (11) freilässt, die von zwei zueinander und zu einem Reaktordurchmesser parallelen und äquidistanten Geraden begrenzt ist, und wobei der Reaktor (1) im Bereich der kreissegmentförmigen Durchtrittsöffnungen (6) und im Bereich der zentralen Durchtrittsöffnung (11) unberohrt ist, **dadurch gekennzeichnet, dass** die Vielzahl der parallel zueinander in Längsrichtung des Reaktors (1) ausgerichteten Kontaktrohre (2) in zwei untereinander gleiche Bündel von Kontaktrohren (2) angeordnet sind, die voneinander durch einen kontaktrohrfreien Bereich, der sich zu beiden Seiten entlang eines Reaktordurchmessers erstreckt, getrennt sind, und dass die Wärmeübergangskoeffizienten an der Grenzschicht zwischen den Kontaktrohren (2) und dem Wärmeträger (7) über jeden Reaktorquerschnitt vergleichmäßigt sind, indem die Strömungswege des Wärmeträgers (7) in jedem Reaktorquerschnitt, jeweils gemessen vom ersten bis zum letzten Kontaktrohr (2) in Strömungsrichtung des Wärmeträgers (7) durch eine Anordnung der Kontaktrohre (2) einander angeglichen sind, dergestalt, dass die seitlichen Begrenzungen der Bündel von Kontaktrohren (2) zu den unberohrten Bereichen an der Reaktorinnenwand in Form von Kreisbögen ausgebildet sind.

2. Reaktor (1) nach Anspruch 1, **dadurch gekennzeichnet, dass** die zwei untereinander gleichen Bündel von Kontaktrohren (2) jeweils in je zwei weitere, untereinander gleiche Bündel von Kontaktrohren (2) aufgetrennt sind, so dass insgesamt vier Bündel von Kontaktrohren (2) vorliegen, die durch zwei kontaktrohrfreie Bereiche, die sich zu beiden Seiten von jeweils senkrecht zueinander stehenden Durchmessern des Reaktors (1) erstrecken, voneinander getrennt sind.

3. Reaktor (1) nach Anspruch 1 oder 2, **dadurch gekennzeichnet, dass** die Strömungswege des Wärmeträgers (7) in jedem Reaktorquerschnitt, jeweils gemessen vom ersten bis zum letzten Kontaktrohr (2) in Strömungsrichtung des Wärmeträgers (7) durch den Einbau von Dummy-Rohren (8) einander angeglichen werden.

4. Verfahren zur Herstellung von Phosgen durch Gasphasenreaktion von Kohlenmonoxid und Chlor in Gegenwart eines Feststoffkatalysators in einem zylindrischen Reaktor (1), der in einer Vielzahl von parallel zueinander in Längsrichtung des Reaktors (1) angeordneten Kontaktrohren (2) den Feststoffkatalysator enthält, die an beiden Enden derselben in jeweils einem Rohrboden (3) eingeschweißt sind, mit Zuführung der Edukte am oberen Ende der Kontaktrohre (2) und Ableitung des gasförmigen Reaktionsgemisches am unteren Ende der Kontaktrohre (2), jeweils über eine Haube, sowie mit Zu- bzw. Abführeinrichtungen für einen flüssigen Wärmeträger in den Mantelraum (4) zwischen den Kontaktrohren (2), wobei die Strömung des Wärmeträgers im Mantelraum (4) zwischen den Kontaktrohren (2) mittels Umlenkblechen (5) mäanderförmig geleitet wird, wobei jeweils ein Umlenkblech zwei einander gegenüberliegende kreissegmentförmige Durchtrittsöffnungen (6) an der Reaktorinnenwand freilässt, und das jeweils unmittelbar darauf folgende Umlenkblech eine zentrale Durchtrittsöffnung (11) freilässt, die von zwei zueinander und zu einem Reaktordurchmesser parallelen und äquidistanten Geraden begrenzt ist, und wobei der Reaktor (1) im Bereich der kreissegmentförmigen Durchtrittsöffnungen (6) und der zentralen Durchtrittsöffnung (11) unberohrt ist, **dadurch gekennzeichnet, dass** die Vielzahl der parallel zueinander in Längsrichtung des Reaktors (1) ausgerichteten Kontaktrohre (2) in zwei untereinander gleichen Bündeln von Kontaktrohre (2) angeordnet sind, die voneinander durch einen kontaktrohrfreien Bereich getrennt sind, und dass die Wärmeübergangskoeffizienten an der Grenzschicht zwischen den Kontaktrohren (2) und dem Wärmeträger (7) über jeden Reaktorquerschnitt vergleichmäßigt sind, indem die Strömungswege des Wärmeträgers (7) in jedem Reaktorquerschnitt, jeweils gemessen vom ersten bis zum letzten Kontaktrohr (2) in Strömungsrichtung des Wärmeträgers (7) durch eine Anordnung der Kontaktrohre (2) einander angeglichen sind, dergestalt, dass die seitlichen Begrenzungen der Bündel von Kontaktrohren (2) zu den unberohrten Bereichen an der Reaktorinnenwand in Form von Kreisbögen ausgebildet sind.

5. Verfahren nach Anspruch 4, **dadurch gekennzeichnet, dass** die zwei untereinander gleichen Bündel von Kontaktrohren (2) jeweils in je zwei weitere, untereinander gleiche Bündel von Kontaktrohren (2) aufgetrennt sind, so dass insgesamt vier Bündel von Kontaktrohren (2) vorliegen, die durch zwei kontaktrohrfreie Bereiche, die sich zu beiden Seiten von jeweils senkrecht zueinander stehenden Durchmessern des Reaktors (1) erstrecken, getrennt sind.

6. Verfahren nach Anspruch 4 oder 5, **dadurch gekennzeichnet, dass** die Strömungswege des Wärmeträgers (7) in jedem Reaktorquerschnitt, jeweils gemessen vom ersten bis zum letzten Kontaktrohr (2) in Strömungsrichtung des Wärmeträgers (7) durch den Einbau von Dummy-Rohren (8) einander angeglichen werden.

**Claims**

1. A cylindrical reactor (1) for preparing phosgene by gas-phase reaction of carbon monoxide and chlorine in the presence of a solid-state catalyst, which is provided in a plurality of catalyst tubes (2) which are arranged parallel to one another in the longitudinal direction of the reactor (1) and are welded at each of their two ends into a tube plate (3), with introduction of the starting materials at the upper end of the catalyst tubes (2) and discharge of the gaseous reaction mixture at the lower end of the catalyst tubes (2), in each case via a cap, and also with introduction and discharge facilities for a liquid heat transfer medium (7) in the space (4) between the catalyst tubes (2) within the shell, where the flow of the heat transfer medium (7) in the space (4) between the catalyst tubes (2) within the shell is meandering as a result of deflection plates (5), each alternative deflection plate (5) leaves two openings (6) having the shape of a segment of a circle free on opposite sides at the interior wall of the reactor and the immediately subsequent deflection plate leaves a central opening (11) which is bounded by two straight lines which are parallel to and equidistant from one another and a reactor diameter free and the reactor (1) has no tubes in the region of the openings (6) having the shape of a segment of a circle and in the region of the central openings (11), wherein the many catalyst tubes (2) aligned parallel to one another in the longitudinal direction of the reactor (1) are arranged in two bundles of identical catalyst tubes (2) which are separated from one another by a region which is free of catalyst tubes (2) and extends to both sides along a reactor diameter and the heat transfer coefficients at the interface between the catalyst tubes (2) and the heat transfer medium (7) are equalized over each reactor cross section by the flow paths of the heat transfer medium (7) in each reactor cross section, in each case measured from the first to last catalyst tube (2) in the flow direction of the heat transfer medium (7), being matched to one another by means of an arrangement of the catalyst tubes (2) such that the lateral boundaries of the bundles of catalyst tubes (2) to the untubed regions on the interior wall of the reactor are designed in the form of circular arcs.

2. The reactor (1) according to claim 1, wherein the two bundles of identical catalyst tubes (2) are each divided into two further bundles of identical catalyst tubes (2), so that there are a total of four bundles of catalyst tubes (2) which are separated from one another by two regions which are free of catalyst tubes (2) and extend on both sides of mutually perpendicular diameters of the reactor (1).

3. The reactor (1) according to claim 1 or 2, wherein the flow paths of the heat transfer medium (7) in each reactor cross section, in each case measured from the first catalyst tube to the last catalyst tube (2) in the flow direction of the heat transfer medium (7), are further matched to one another by installation of dummy tubes (8).

4. A process for preparing phosgene by gas-phase reaction (1) of carbon monoxide and chlorine in the presence of a solid-state catalyst, in a cylindrical reactor (1) which comprises the solid-state catalyst in a plurality of catalyst tubes (2) which are arranged parallel to one another in the longitudinal direction of the reactor (1) and are welded at each of their two ends into a tube plate (3), with introduction of the starting materials at the upper end of the catalyst tubes (2) and discharge of the gaseous reaction mixture at the lower end of the catalyst tubes (2), in each case via a cap, and also with introduction and discharge facilities for a liquid heat transfer medium in the space (4) between the catalyst tubes (2) within the shell, where the flow of the heat transfer medium in the space (4) between the catalyst tubes (2) within the shell is meandering as a result of deflection plates (5), each alternative deflection plate leaves two openings (6) having the shape of a segment of a circle free on opposite sides at the interior wall of the reactor and the immediately subsequent deflection plate leaves a central opening (11) which is bounded by two straight lines which are parallel to and equidistant from one another and a reactor diameter free and the reactor (1) has no tubes in the region of the openings (6) having the shape of a segment of a circle and in the region of the central openings (11), wherein the many catalyst tubes (2) aligned parallel to one another in the longitudinal direction of the reactor (1) are arranged in two bundles of identical catalyst tubes (2) which are separated from one another by a region which is free of catalyst tubes (2) and the heat transfer coefficients at the interface between the catalyst tubes (2) and the heat transfer medium (7) are equalized over each reactor cross section by the flow paths of the heat transfer medium (7) in each reactor cross section, in each case measured from the first to last catalyst tube (2) in the flow direction of the heat transfer medium (7), being matched to one another by means of an arrangement of the catalyst tubes (2) such that the lateral boundaries of the bundles of catalyst tubes (2) to the untubed regions on the interior wall of the reactor are designed in the form of circular arcs.

5. The process according to claim 4, wherein the two bundles of identical catalyst tubes (2) are each divided into two further bundles of identical catalyst tubes (2), so that there are a total of four bundles of catalyst tubes (2) which are separated from one another by two regions which are free of catalyst tubes (2) and extend on both sides of mutually perpendicular diameters of the reactor (1).

6. The process according to claim 4 or 5, wherein the flow paths of the heat transfer medium (7) in each reactor cross section, in each case measured from the first catalyst tube to the last catalyst tube (2) in the flow direction of the heat transfer medium (7), are further matched to one another by installation of dummy tubes (8).

## Revendications

1. Réacteur cylindrique (1) pour la fabrication de phosgène par réaction en phase gazeuse de monoxyde de carbone et de chlore en présence d'un catalyseur solide, qui est prévu dans une pluralité de tubes de contact (2) agencés parallèlement les uns aux autres dans la direction longitudinale du réacteur (1), qui sont chacun soudés dans une plaque tubulaire (3) à leurs deux extrémités, avec introduction des réactifs à l'extrémité supérieure des tubes de contact (2) et déchargement du mélange réactionnel gazeux à l'extrémité inférieure des tubes de contact (2), à chaque fois par le biais d'un collecteur, et avec des dispositifs d'entrée et de sortie pour un caloporteur liquide (7) dans l'espace d'enveloppe (4) entre les tubes de contact (2), l'écoulement du caloporteur (7) dans l'espace d'enveloppe (4) entre les tubes de contact (2) étant dirigé sous forme sinueuse au moyen de déflecteurs (5), un déflecteur (5) libérant à chaque fois deux ouvertures de passage (6) en forme de segment de cercle, opposées l'une à l'autre, sur la paroi intérieure du réacteur, et le déflecteur directement suivant libérant à chaque fois une ouverture de passage centrale (11), qui est délimitée par deux droites équidistantes et parallèles l'une à l'autre et à un diamètre du réacteur, et le réacteur (1) étant dénué de tubes dans la zone des ouvertures de passage en forme de segment de cercle (6) et dans la zone de l'ouverture de passage centrale (11), **caractérisé en ce que** la pluralité de tubes de contact (2) orientés parallèlement les uns aux autres dans la direction longitudinale du réacteur (1) sont agencés sous la forme de deux faisceaux de tubes de contact (2) similaires entre eux, séparés l'un de l'autre par une zone sans tube de contact qui s'étend des deux côtés le long d'un diamètre du réacteur, et **en ce que** les coefficients de transfert de chaleur sont égalisés sur la couche limite entre les tubes de contact (2) et le caloporteur (7) sur chaque section transversale du réacteur, les trajectoires d'écoulement du caloporteur (7) dans chaque section transversale du réacteur, respectivement mesurées depuis le premier jusqu'au dernier tube de contact (2) dans la direction d'écoulement du caloporteur (7), étant harmonisées les unes avec les autres par un agencement des tubes de contact (2) tel que les limites latérales des faisceaux de tubes de contact (2) au niveau des zones sans tube sur la paroi intérieure du réacteur soient configurées sous la forme d'arcs de cercle.

2. Réacteur (1) selon la revendication 1, **caractérisé en ce que** les deux faisceaux de tubes de contact (2) similaires entre eux sont chacun divisés en deux autres faisceaux de tubes de contact (2) similaires entre eux, de sorte qu'au total quatre faisceaux de tubes de contact (2) soient présents, qui sont séparés les uns des autres par deux zones sans tube de contact, qui s'étendent des deux côtés de diamètres perpendiculaires l'un à l'autre du réacteur (1).

3. Réacteur (1) selon la revendication 1 ou 2, **caractérisé en ce que** les trajectoires d'écoulement du caloporteur (7) dans chaque section transversale du réacteur, à chaque fois mesurées depuis le premier jusqu'au dernier tube de contact (2) dans la direction d'écoulement du caloporteur (7), sont harmonisées entre elles par l'incorporation de tubes factices (8).

4. Procédé de fabrication de phosgène par réaction en phase gazeuse de monoxyde de carbone et de chlore en présence d'un catalyseur solide dans un réacteur cylindrique (1), qui contient le catalyseur solide dans une pluralité de tubes de contact (2) agencés parallèlement les uns aux autres dans la direction longitudinale du réacteur (1), qui sont chacun soudés dans une plaque tubulaire (3) à leurs deux extrémités, avec introduction des réactifs à l'extrémité supérieure des tubes de contact (2) et déchargement du mélange réactionnel gazeux à l'extrémité inférieure des tubes de contact (2), à chaque fois par le biais d'un collecteur, et avec des dispositifs d'entrée et de sortie pour un caloporteur liquide dans l'espace d'enveloppe (4) entre les tubes de contact (2), l'écoulement du caloporteur dans l'espace d'enveloppe (4) entre les tubes de contact (2) étant dirigé sous forme sinueuse au moyen de déflecteurs (5), un déflecteur libérant à chaque fois deux ouvertures de passage (6) en forme de segment de cercle, opposées l'une à l'autre, sur la paroi intérieure du réacteur, et le déflecteur directement suivant libérant à chaque fois une ouverture de passage centrale (11), qui est délimitée par deux droites équidistantes et parallèles l'une à l'autre et à un diamètre du réacteur, et le réacteur (1) étant dénué de tubes dans la zone des ouvertures de passage en forme de segment de cercle (6) et dans la zone de l'ouverture de passage centrale (11), **caractérisé en ce que** la pluralité de tubes de contact (2) orientés parallèlement les uns aux autres dans la direction longitudinale du réacteur (1) sont agencés sous la forme de deux faisceaux de tubes de contact (2) similaires entre eux, séparés l'un de l'autre par une zone sans tube de contact, et **en ce que** les coefficients de transfert de chaleur sont égalisés sur la couche limite entre les tubes de contact (2) et le caloporteur (7) sur chaque section transversale du réacteur, les trajectoires d'écoulement du caloporteur (7) dans chaque section transversale du réacteur, respectivement mesurées depuis le premier jusqu'au dernier tube de contact (2) dans la direction d'écoulement du caloporteur (7), étant harmonisées les unes avec les autres par un agencement des tubes de contact (2) tel que les limites latérales des faisceaux de tubes de contact (2) au niveau des zones sans tube sur la paroi intérieure du réacteur soient configurées sous la forme d'arcs de cercle.

5. Procédé selon la revendication 4, **caractérisé en ce que** les deux faisceaux de tubes de contact (2) similaires entre eux sont chacun divisés en deux autres faisceaux de tubes de contact (2) similaires entre eux, de sorte qu'au total quatre faisceaux de tubes de contact (2) soient présents, qui sont séparés les uns des autres par deux zones sans tube de contact, qui s'étendent des deux côtés de diamètres perpendiculaires l'un à l'autre du réacteur (1).

6. Procédé selon la revendication 4 ou 5, **caractérisé en ce que** les trajectoires d'écoulement du caloporteur (7) dans chaque section transversale du réacteur, à chaque fois mesurées depuis le premier jusqu'au dernier tube de contact (2) dans la direction d'écoulement du caloporteur (7), sont harmonisées entre elles par l'incorporation de tubes factices (8).

# FIG.1

# FIG.1A

# FIG.2

# FIG.2A

**IN DER BESCHREIBUNG AUFGEFÜHRTE DOKUMENTE**

**In der Beschreibung aufgeführte Patentdokumente**

- WO 03072237 A

**In der Beschreibung aufgeführte Nicht-Patentliteratur**

- Ullmanns Enzyklopädie der technischen Chemie. vol. A 19, 413-414